# EUROPÄISCHE PATENTSCHRIFT

(11) **EP 0 529 274 B1**
(45) Veröffentlichungstag und Bekanntmachung des Hinweises auf die Patenterteilung: **13.12.1995**
(21) Anmeldenummer: 92112154.7
(22) Anmeldetag: 16.07.1992
(51) Int. Cl.: F02D 41/22, F02D 41/26, G05B 9/03

(54) **Verfahren zur Steuerung von betriebsparameterabhängigen und sich zyklisch wiederholenden Betriebsvorgängen von Brennkraftmaschinen**
Method for controlling cyclically recurring, parameter dependant operations of an internal combustion engine
Méthode pour commander les opérations cycliques et de pendantes de paramètres de fonctionnement d'un moteur à combustion interne

(30) Priorität: 29.08.1991 DE 4128658
(43) Veröffentlichungstag der Anmeldung: 03.03.1993
(73) Patentinhaber: ROBERT BOSCH GMBH, 70442 Stuttgart (DE)
(72) Erfinder: Hoeptner, Wolfgang, Dr. Dipl.-Phys., W-7326 Uhingen (DE); Krauter, Immanuel, Dipl.-Ing., W-7151 Erbstetten (DE); Schenk, Joachim, W-7254 Hemmingen (DE); Lohse, Mathias, Dipl.-Ing., W-7000 Stuttgart 1 (DE); Schaefer-Siebert, Dietrich, Dr., W-7000 Stuttgart 30 (DE); Schwotzer, Wolfgang, Dipl.-Ing., W-7120 Bietigheim (DE)

(56) Entgegenhaltungen:
- WO-A-87/03044
- WO-A-88/02812
- DE-A- 3 927 699
- GB-A- 2 173 611
- PATENT ABSTRACTS OF JAPAN vol. 10, no. 126 (M-477)(2183) 10. Mai 1986 & JP-A-60 252 140 (HONDA GIKEN KOGYO K.K.) 12. Dezember 1985
- PATENT ABSTRACTS OF JAPAN vol. 9, no. 313 (M-437)(2036) 10. Dezember 1985 & JP-A-60 147 553 (NIPPON DENSO K.K.)
- VDI-BERICHT NR.687, 1988; S. 387-399;
- 16. FISITA; FLORENZ, 5/87; PAPER 87016;

## Beschreibung

### Stand der Technik

Die Erfindung betrifft ein Verfahren zur Steuerung von beriebsparamterabhängigen und sich zyklisch wiederholenden Betriebsvorgängen von Brennkraftmaschinen. Aus der GB-A-2 173 611 ist ein Steuersystem zum Steuern einer Brennkraftmaschine mit zwei Prozessoreinheiten bekannt. Hierbei findet zwischen den Prozessoreinheiten ein Datentransfer statt. Die Ausgangssignale der Kurbelwellen- und Nockenwellen- Geber sind an ein Steuergerät gefuhrt und werden hier entsprechend aufbereitet. Parallel dazu ist das Signal des Nockenwellensensors außerdem noch an das andere Steuergerät geführt. Die aufbereiteten Sensorsignale werden von dem einem Steuergerät an das andere Steuergerät übertragen. Beide Steuergeräte sind so aufgebaut, daß sie jeweils die entsprechenden Vorgange der Brennkraftmaschine steuern können. Bei eine Ausfall der Datenübertragung liegen dem zweiten Steuergerät keine Informationen hinsichtlich der weiteren Gebersignale vor, so daß dann der gesamte Betrieb der Brennkraftmaschine durch das erste Steuergerät gesteuert wird. Zur Datenübertragung zwischen zwei Mikroprozessoren kann ein Datenbus verwendet werden, wie er aus der DE-OS 31 02 388 bekannt ist. Solche Anordnung zur Übertragung von Daten zwischen Mikroprozessoren ermöglichen es, den Arbeitsanfall bei komplexen zu steuernden Vorgängen durch eine Art Arbeitsaufteilung zu reduzieren.

### Vorteile der Erfindung

Das erfindungsgemäße Verfahren mit den kennzeichnenden Merkmalen des Hauptanspruchs hat demgegenüber den Vorteil, daß jeder Mikroprozessor auch bei Ausfall der Datenübertragung aufgrund eines ihm zugeführten Gebersignals funktionsfähig ist, indem bei fehlenden oder fehlerhaften Eingangsdaten ein Notlaufprogramm aktiviert wird. Als weiterer Vorteil ist anzusehen, daß durch Aufteilung der verschiedenen zu steuernden Vorgänge einfachere Mikroprozessoren verwendet werden. Gleichzeitig sinkt die Softwarebelastung und damit die Laufzeit der abzuarbeitenden Programme.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, daß die Mikroprozessoren in verschiedenen räumlich getrennten Steuersystemen einbaubar sind, und die verschiedenen Steuersysteme die Daten über einen Datenbus austauschen. Dadurch können die Steuergeräte besser an die von ihnen gesteuerte Peripherie angeordnet werden, und der Datenbus ist eine definierte Schnittstelle zwischen den einzelnen Steuersystemen.

Ein weiterer Vorteil ist, daß bei Ausfall der Datenübertragung mit Hilfe der Signale des Kurbelwellensensors eine Laufunruheerkennung durchgeführt wird. Bei einer erkannten Laufunruhe wird zum Schutz des Katalysators die Einspritzung vorzugsweise zylinderselektiv abgeschaltet. Eine Möglichkeit für eine sichere Einspritzabschaltung im Notlaufprogramm wird erreicht, in dem beispielsweise das Nockenwellensignal auch dem Einspritzsteuergerät zugeführt wird. Dieses Signal aber nur bei Aktivierung des Notlaufprogramms vom Mikroprozessor verarbeitet wird.

Gleichzeitig kann das Zündsteuergerät bei Datenausfall mit Hilfe der Signale des Nockenwellensensors im Notlaufprogramm eine Drehzahlbestimmung durchführen und so die Ansteuerung der Zündendstufen sicherstellen.

Die erfindungsgemäße Vorrichtung mit den kennzeichnenden Merkmalen des nebengeordneten Anspruchs, hat den Vorteil, daß eine Vorrichtung zur Steuerung von Betriebsvorgängen mittels einer Fehlerdekodierstufe ihren Dateneingang überwacht und bei Erkennung eines Fehlers oder fehlenden Eingangsdaten ein Notlaufprogramm die Funktion der Vorrichtung sicherstellt.

Für den Fahrer eines Kraftfahrzeuges bedeutet das beispielsweise, daß der Fehler angezeigt wird, daß Kraftfahrzeug aber betriebsfähig bleibt, so daß eine Werkstatt angefahren werden kann.

### Zeichnung

Ausführungsbeispiele der Erfindung sind in der Zeichnung dargestellt und in der nachfolgenden Beschreibung näher erläutert. Es zeigen Figur 1 ein Blockschaltbild zur Durchführung des erfindungsgemäßen Verfahrens, Figur 2 den Ablaufplan in der ersten Vorrichtung und Figur 3 den Ablaufplan in der zweiten Vorrichtung.

### Beschreibung der Ausführungsbeispiele

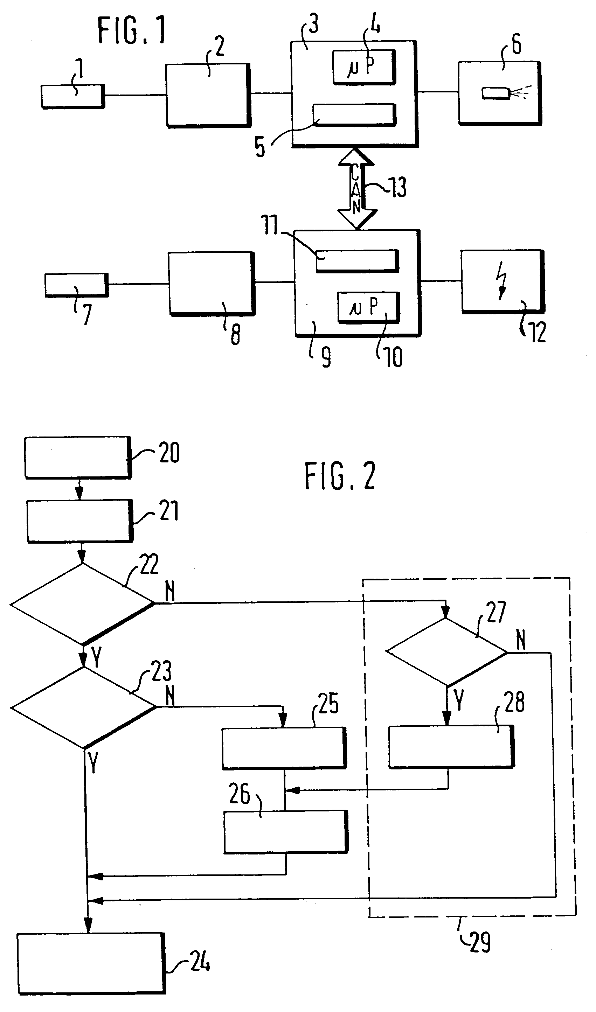

Figur 1 zeigt einen Kurbelwellensensor 1, welcher mit einer Verarbeitungsstufe 2 verbunden ist, die die vom Kurbelwellensensor 1 zur Verfügung gestellten Signale in entsprechende Kurbelwellensignale umwandelt und an ein Einspritzsteuergerät 3 weiterleitet. Dieses Einspritzsteuergerät 3 enthält einen Mikroprozessor 4 zur Verarbeitung der verschiedenen Eingangsgrößen und eine Fehlerdekodierstufe 5. Ein Ausgang des Einspritzsteuergerätes 3 ist mit einer Einspritzvorrichtung 6 verbunden. Parallel zu dieser Verarbeitung des Kurbelwellensignals werden von einem Nockenwellensensor 7 die Signale eines, hier nicht dargestellten, Nockenwellengebers erfaßt und über eine Verarbeitungsstufe 8 die entsprechenden Nockenwellensignale an ein Zündsteuergerät 9 weitergeleitet. Das Zündsteuergerät 9 ist ausgangsseitig mit einer Zündendstufe 12 verbunden. Beide Steuergeräte sind an einen Datenbus 13 angeschlossen, so daß über diesen Datenbus 13 ein Austausch von Daten, welche in den einzelnen Steuersystemen aus den ihnen zugeführten Signalen, beispielsweise Kurbel- oder Nockenwellensignale, bestimmt werden, erfolgt. Die übertragenen Daten liefern Informationen über die Funktionsfähigkeit und die Arbeitsweise der einzelnen Steuergeräte.

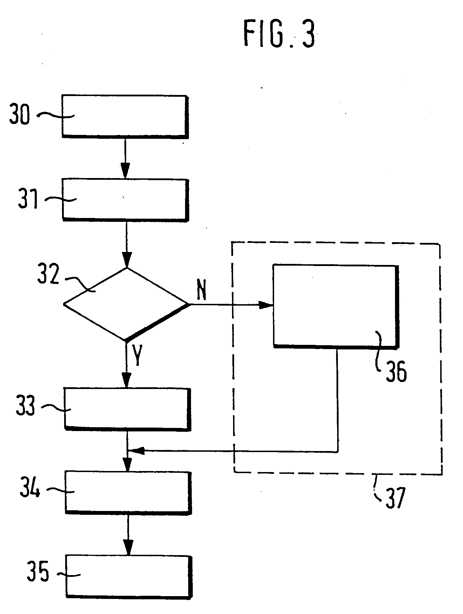

Die Wirkungsweise der Figur 1 soll im folgenden unter Zuhilfenahme der Figuren 2 und 3 näher erläutert werden.

Im ordnungsgemäßen Betrieb wird im Mikroprozessor 4 des Einspritzsteuergerätes 3 mit Hilfe des vom Kurbelwellensensor gelieferten Kurbelwellensignals und mit dem vom Datenbus 13 übertragenen Daten des Zündsteuergerätes 9 die Einspritzzeit t_{einspritz} berechnet und ein entsprechendes Signal an die Einspritzvorrichtung 6 ausgegeben. Im Einspritzsteuergerät werden dabei zunächst in einem ersten Arbeitsschritt 20 die Signale des Kurbelwellensensors 1 erfaßt. In einem zweiten Arbeitsschritt 21 werden die vom Datenbus 13 übertragenen Daten in die Fehlerdekodierstufe 5 eingelesen. Diese Fehlerdekodierstufe prüft in einem Arbeitsschritt 22, ob überhaupt Daten vom Datenbus übertragen wurden und wenn ja, ob diese Daten fehlerfrei sind, das geschieht beispielsweise über einen Plausibilitätsvergleich des Eingangssignals mit den vom Steuergerät empfangenen Daten anderer Steuergeräte. Bei einer Diskrepanz wird auf einen Fehler geschlossen. Für den Fall, daß die vom Datenbus 13 empfangenen Daten aus dem Zündsteuergerät 9 fehlerfrei waren, führt der Ja-Ausgang der Abfrage 22 zur Abfrage 23. Hier wird mit Hilfe aller empfangenen Eingangsdaten, das betrifft die Kurbelwellensignale und die Daten vom Datenbus, geprüft ob die ausgelöste Zündung ordnungsgemäß war. Diese Überprüfung wird insbesondere anhand der vom Zündsteuergerät 9 gelieferten Daten durchgeführt. Bei einer erfolgten Zündung entsprechend den Betriebsparametern wird im Arbeitsschritt 24 vom Einspritzsteuergerät 3 die Einspritzung in die einzelnen Zylinder durch ein entsprechendes Signal an die Einspritzvorrichtung 6 der einzelnen Zylinder veranlaßt. Wird aufgrund der vom Datenbus 13 übertragenen Daten des Zündsteuergerätes erkannt, daß ein Zündaussetzer aufgetreten ist, so wird im Arbeitsschritt 25, der mit dem Nein-Ausgang der Abfrage 23 verbunden ist, anhand der übertragenen Daten des Zündsteuergerätes der Zylinder in dem eine Fehlzündung erfolgte, selektiert. Anschließend wird im Arbeitsschritt 26 ein Signal ausgegeben, das die Einspritzung in dem betreffenden Zylinder unterbricht. Das vom Arbeitsschritt 26 ausgegebene Signal t_{einspritz} = 0 wird an den Arbeitsschritt 24 zur entsprechenden Steuerung der Einspritzventile weitergegeben. Das heißt, die Einspritzung wird unterbrochen. Dieser eben beschriebene Programmzweig wird abgearbeitet, für den Fall, daß von der Fehlerdekodierstufe 5 keine fehlenden oder fehlerhaften Eingangsdaten erkannt wurden. Werden im Gegensatz dazu fehlerhafte oder fehlende Eingangsdaten ermittelt, so erfolgt mit dem Nein-Ausgang der Abfrage 22 die Aktivierung des Notlaufprogramms 29. Im Notlaufprogramm 29 wird zunächst in der Abfrage 27 kontrolliert, ob eine Laufunruhe auftritt. Zu diesem Zweck werden anhand des zur Verfügung stehenden Kurbelwellensignals die Zeiten zwischen zwei Impulsen gemessen, um so beispielsweise aus dieser Zeit die Drehzahl zu ermitteln und bei einem etwaigen Drehzahleinbruch, der durch einen fehlenden positiven Beschleunigungsschub nach einer fehlerhaften Zündung hervorgerufen wird, einen Zündaussetzer zu detektieren. Wird eine Laufunruhe und ein damit verbundener Zündaussetzer erkannt, so wird im Programmschritt 28 anhand des Kurbelwellensignals der Zylinder, in dem der Zündaussetzer aufgetreten ist, detektiert. In einem Zylinder erfolgt alle alle 720° Kurbelwellenwinkel eine Einspritzung und Zündung. Da, aufgrund der fehlenden oder fehlerhaften Daten vom Zündsteuergerät keine Information vorliegt, in welcher Umdrehung sich die Kurbelwelle befindet, wird zunächst die Einspritzung in einem Zylinder abgeschaltet. Anschließend wird kontrolliert, ob die bereits ermittelte Laufunruhe auftritt oder sich eventuell eine zusätzliche Laufunruhe einstellt. Ergibt sich eine zusätzliche Laufunruhe, so wurde die Einspritzung im falschen Zylinder abgeschaltet und sie muß nun in dem Zylinder abgeschaltet werden, der um 360° versetzt zu dem vorher abgeschalteten Zylinder zündet. Es erfolgt wie bereits zu Arbeitsschritt 26 beschrieben ein Signal, welches die Abschaltung der Einspritzung t_{einspritz} = 0 bewirkt. Im Arbeitsschritt 24 wird dieses Signal vom Einspritzsteuergerät in der Art verarbeitet, daß es die Einspritzventile entsprechend ansteuert. Die Unterbrechung der Einspritzung in einem fehlerhaft arbeitenden Zylinder bewirkt, daß das Abgasverhalten bei einem auftretenden Fehler nicht verschlechtert wird und der Katalysator vor Überhitzung und damit vor Zerstörung geschützt ist. Wurde im Programmschritt 27 keine Laufunruhe ermittelt, so wird das Notlaufprogramm verlassen und die Einspritzung aufgrund des zur Verfügung stehenden Kurbelwellensignals durchgeführt.

Eine weiter, hier nicht dargestellte Möglichkeit, besteht darin, daß dem Einspritzsteuergerät 3 zusätzlich das Signal des Nockenwellensensors 7 über die Verarbeitungsstufe 8 zugeführt ist. Dieses Nockenwellensignal wird im Normalbetrieb nicht vom Einspritzsteuergerät verarbeitet, da es über den Datenbus 13 vom Zündsteuergerät bereits in aufbereiteter Form übertragen wird. Für den Fall fehlerhafter oder fehlender Daten wird bei Aktivierung des Notlaufprogramms jedoch das bereitstehende Nockenwellensignal verarbeitet und zur Steuerung der Einspritzung herangezogen, insbesondere zur Auswahl des Zylinders, bei dem die Einspritzung unterbunden werden soll.

Figur 3 zeigt das Programm, welches im Zündsteuergerät abgearbeitet wird. Das Zündsteuergerät 9 erfaßt in einem ersten Arbeitsschritt 30 das Nockenwellensignal 8. In einem darauffolgenden Arbeitsschritt 31 werden von der Fehlerdekodierstufe 11 die vom Datenbus gelieferten Daten des Einspritzsteuergerätes 3 eingelesen. In einer Abfrage 32 wird nun kontrolliert, ob die vom Datenbus 13 übertragenen Daten des Einspritzsteuergerätes fehlerfrei sind beziehungsweise ob überhaupt Daten bereitgestellt wurden. Die Prüfung auf Fehlerfreiheit erfolgt analog zu dem in Arbeitsschritt 22 beschriebenen Plausibilitätsvergleich. Bei einem Ja auf diese Abfrage wird in einem nun folgenden Arbeitsschritt 33 anhand des Nockenwellensignals und der vom Einspritzsteuergerätes bearbeiteten Kurbelwellensignale die Drehzahl bestimmt, indem die Zeit zwischen zwei Nockenwellensignalen oder zwei Kurbelwellensignalen gemessen und ausgewertet wird. Mit dieser bestimmten Drehzahl wird in einem Arbeitsschritt 34 der Zündzeitpunkt berechnet und in einem Arbeitsschritt 35 vom Zündsteuergerät an die Zündendstufen ausgegeben. Dieser Programmzweig stellt den Ablaufplan im ordnungsgemäßen Betrieb und bei ordnungsgemäßer Datenübertragung dar. Für den Fall, daß der Datenempfang über den Datenbus gestört war, also die Abfrage 32 mit nein zu entscheiden ist, wird das Notlaufprogramm 37 aktiviert. In diesem Notlaufprogramm 37 wird aus den zur Verfügung stehenden Signalen des Nockenwellensensors die Drehzahl n berechnet. Das geschieht dadurch, daß die Zeit zwischen zwei Bezugsmarken gemessen und in die entsprechende Drehzahl umgerechnet wird. Mit der in diesem Arbeitsschritt 36 berechneten Drehzahl wird nun im Arbeitsschritt 34 der Zündzeitpunkt bestimmt und analog zum ordnungsgemäßen Betrieb vom Zündsteuergerät im Arbeitsschritt 35 an die Zündendstufen ausgegeben. Mit dieser Maßnahme wird im Notlaufprogramm die Funktionsfähigkeit der Brennkraftmaschine gewährleistet.

Diese in den beiden Steuergeräten ablaufenden Programme mit der Möglichkeit der Aktivierung eines Notlaufprogramms ermöglichen es, bei gestörter Datenübertragung die Brennkraftmaschine funktionsfähig zu erhalten.

Gleichzeitig kann der Fahrer eines Kraftfahrzeugs durch eine Fehleranzeige, beispielsweise ein optisches Signal, das bei Aktivierung des Notlaufprogramms betätigt wird, auf einen Fehler aufmerksam gemacht werden.

## Patentansprüche

1. Verfahren zur Steuerung von betriebsparameterabhängigen und sich zyklisch wiederholenden Betriebsvorgängen von Brennkraftmaschinen, insbesondere Zünd- und/oder Einspritzvorgängen, wobei zur Steuerung unterschiedlicher Betriebsvorgänge mindestens zwei Mikroprozessoren verwendet werden und die Mikroprozessoren zur Steuerung unterschiedlicher Betriebsvorgänge über einen Datenbus zum Austausch von Betriebsdaten verbunden sind, wobei einem ersten Mikroprozessor (4) ein Signal eines an der Kurbelwelle angebrachten Sensors (1) nicht über den Datenbus zugeführt wird und wobei einem zweiten Mikroprozessor (10) ein Signal eines an der Nockenwelle angebrachten Sensor (7) nicht über den Datenbus zugeführt wird, wobei die von den Sensoren (1,7) an die Mikroprozessoren (4, 10) geführten Signale in den Mikroprozessoren (4,10) in Daten umgewandelt werden, wobei der erste bzw. der zweite Mikroprozessor die ermittelten Daten über den Datenbus (13) mit dem zweiten bzw. dem ersten Mikroprozessor austauscht, wobei in den Mikroprozessoren (4,10) der Eingang dieser Daten überwacht wird und wobei beim Fehlen dieser Daten in den Mikroprozessoren (4,10) Notlaufprogramme aktiviert werden, wobei im ersten Mikroprozessor (4) in einem Notlaufprogramm mit Hilfe des Signals des an der Kurbelwelle angebrachten Sensors (1) die Einspritzung gesteuert und eine Laufunruheerkennung durchgeführt und bei erkannter Laufunruhe die Einspritzung (6) unterbrochen wird und wobei im zweiten Mikroprozessor (10) in einem anderen Notlaufprogramm mit Hilfe des Signals des an der Nockenwelle angebrachten Sensors (7) die Drehzahl und darauf basierend der Zündzeitpunkt bestimmt wird.

2. Verfahren nach Anspruch 1, dadurch gekennzeichnet, daß der erste Mikroprozessor (4) in einer ersten Vorrichtung (3), der zweite Mikroprozessor (10) in einer zweiten Vorrichtung (9) angeordnet ist und die erste Vorrichtung (3) von der zweiten Vorrichtung (9) räumlich getrennt angeordnet wird.

3. Verfahren nach Anspruch 1 oder 2, dadurch gekennzeichnet, daß zur Laufunruheerkennung anhand der Signale des an der Kurbelwelle angebrachten Sensors (1) eine Drehzahlerfassung durchgeführt wird und bei einem Drehzahleinbruch der dazugehörige Zylinder ermittelt und in diesem Zylinder die Einspritzung unterbrochen wird.

4. Verfahren nach einem der vorherigen Ansprüche, dadurch gekennzeichnet, daß das Nockenwellensignal an das Einspritzsteuergerät geführt ist und daß bei Aktivierung des Notlaufpgramms das Einspritzsteuergerät das Nockenwellensignal verarbeitet.

5. Vorrichtung zur Steuerung von betriebsparameterabhängigen und sich zyklisch wiederholenden Betriebsvorgängen von Brennkraftmaschinen, insbesondere Einspritz- und/oder Zündvorgängen wobei zum Steuern unterschiedlicher Betriebsvorgange mindestens zwei Mikroprozessoren vorhanden sind, die zum Datenaustausch untereinander über einen Datenbus miteinander verbunden sind, wobei einem ersten Mikroprozessor (4) ein Signal eines an der Kurbelwelle angebrachten Sensors (1) nicht über den Datenbus zugeführt ist und wobei einem zweiten Mikroprozessor (10) ein Signal eines an der Nockenwelle angebrachten Sensor (7) nicht über den Datenbus zugeführt ist, wobei die Mikroprozessoren (4,10) die von den Sensoren (1,7) an die Mikroprozessoren (4, 10) geführten Signale in Daten
umwandeln, wobei der erste bzw. der zweite Mikroprozessor die ermittelten Daten über den Datenbus (13) mit dem zweiten bzw. mit dem ersten Mikroprozessor austauscht und wobei die Mikroprozessoren (4,10) den Eingang dieser Daten überwachen und beim Fehlen dieser Daten in den Mikroprozessoren (4,10) Notlaufprogramme aktivierbar sind, so daß der erste Mikroprozessor (4) in einem Notlaufprogramm mit Hilfe des Signals des an der Kurbelwelle angebrachten Sensors (1) die Einspritzung steuert und eine Laufunruheerkennung durchführt und bei erkannter Laufunruhe die Einspritzung (6) unterbricht und wobei im zweiten Mikroprozessor (10) in einem anderen Notlaufprogramm mit Hilfe des Signals des an der Nockenwelle angebrachten Sensors (7) die Drehzahl und darauf basierend der Zündzeitpunkt bestimmbar ist.

6. Vorrichtung nach Anspruch 5, dadurch gekennzeichnet, daß die Fehlerdekodierstufe bei Aktivierung des Notlaufprogramms ein Fehlersignal abgibt.

## Claims

1. Method for controlling operational-parameter-dependent and cyclically recurring operational processes of internal combustion engines, in particular ignition processes and/or injection processes, at least two microprocessors being used to control different operational processes and the microprocessors for controlling different operational processes being connected via a data bus in order to exchange operational data, a signal from a sensor (1) which is attached to the crankshaft being fed to a first microprocessor (4), not via the data bus, and a signal from a sensor (7) which is attached to the camshaft being fed to a second microprocessor (10), not via the data bus, the signals which are led from the sensors (1, 7) to the microprocessors (4, 10) are converted in the microprocessors (4, 10) into data, the first or the second microprocessor interchanging the acquired data with the second or the first microprocessor, respectively, via the data bus (13), the inputting of this data being monitored in the microprocessors (4, 10) and emergency operating programs being activated in the microprocessors (4, 10) when this data is absent, the injection being controlled in the first microprocessor (4) in an emergency operating program using the signal of the sensor (1) which is attached to the crankshaft and an unsmooth running detection is carried out and when unsmooth running is detected the injection (6) is interrupted, and the rotational speed and, using it as a basis, the ignition time being determined in the second microprocessor (10) in another emergency operating program using the signal from the sensor (7) attached to the camshaft.

2. Method according to Claim 1, characterized in that the first microprocessor (4) is arranged in a first device (3), the second microprocessor (10) is arranged in a second device (9) and the first device (3) is arranged spatially separated from the second device (9).

3. Method according to Claim 1 or 2, characterized in that in order to detect unsmooth running by means of the signals of the sensor (1) attached to the crankshaft a rotational speed detection is carried out and when a drop in the rotational speed occurs the associated cylinder is identified and the injection in this cylinder is interrupted.

4. Method according to one of the preceding claims, characterized in that the camshaft signal is led to the injection control unit, and in that the injection control unit processes the camshaft signal when the emergency operating program is activated.

5. Device for controlling operational-parameter-dependent and cyclically recurring operational processes of internal combustion engines, in particular injection processes and/or ignition processes, at least two microprocessors being present to control different operational processes, said microprocessors being connected to one another in order to exchange data with one another via a data bus, a signal from a sensor (1) which is attached to the crankshaft being fed to a first microprocessor (4), not via the data bus, and a signal from a sensor (7) which is attached to the camshaft being fed to a second microprocessor (10), not via the data bus, the microprocessors (4, 10) converting the signals led from the sensors (1, 7) to the microprocessors (4, 10) into data, the first or the second microprocessor interchanging the acquired data via the data bus (13) with the second or with the first microprocessor, and the microprocessors (4, 10) monitoring the inputting of this data and it being possible for emergency operating programs to be activated in the microprocessors (4, 10) when this data is absent so that the first microprocessor (4) controls the injection in an emergency operating program using the signal from the sensor (1) which is attached to the crankshaft and carries out an unsmooth running detection and when unsmooth running is detected interrupts the injection (6), and the rotational speed and, using it as a basis, the ignition time being capable of being determined in the second microprocessor (10) in another emergency operating program using the signal from the sensor (7) which is attached to the camshaft.

6. Device according to Claim 5, characterized in that the fault decoding stage outputs a fault signal when the emergency operating program is activated.

## Revendications

1. Procédé de commande d'opérations cycliques, dépendant de paramètres de fonctionnement dans un moteur à combustion interne, notamment opération d'allumage et/ou d'injection, la commande de différents modes de fonctionnement utilisant au moins deux microprocesseurs qui sont reliés pour la commande de modes de fonctionnement différents par un bus, pour échanger les données de fonctionnement, un premier microprocesseur (4) recevant un signal d'un capteur (1) équipant le vilebrequin sans utiliser le bus de données et un second microprocesseur (10) recevant un signal d'un capteur (7) équipant l'arbre à cames, et sans passer par le bus de données, les signaux transmis par les capteurs (1, 7) aux microprocesseurs (4, 10) étant convertis par les microprocesseurs (4, 10) en données, le premier ou le second microprocesseur échangeant les données obtenues par le bus de données (13) avec le second ou le premier microprocesseur, et les microprocesseurs (4, 10) surveillant l'entrée de ces données et en cas d'absence des données dans les microprocesseurs (4, 10) un programme de secours est activé, selon lequel dans le premier microprocesseur (4), un programme de secours commande l'injection avec le signal du capteur (1) équipant le vilebrequin et exécute une détection d'irrégularité de fonctionnement et en cas de détection d'une irrégularité de fonctionnement il interrompt l'injection (6) et dans le second microprocesseur (10), dans un autre programme de secours, à l'aide du signal du capteur (7) équipant l'arbre à cames on définit la vitesse de rotation et l'instant d'allumage dépendant de cette vitesse de rotation.

2. Procédé selon la revendication 1, caractérisé en ce que le premier microprocesseur (4) fait partie d'un premier dispositif (3) et le second microprocesseur (10), d'un second dispositif (9), le premier dispositif (3) étant séparé dans l'espace, du second dispositif (9).

3. Procédé selon la revendication 1 ou 2, caractérisé en ce que pour détecter les irrégularités de fonctionnement à l'aide des signaux du capteur (1) équipant le vilebrequin, on effectue une détection de vitesse de rotation et en cas de chute de la vitesse de rotation, on détermine le cylindre correspondant et on coupe l'injection dans ce cylindre.

4. Procédé selon l'une des revendications précédentes, caractérisé en ce que le signal de l'arbre à cames est transmis à l'appareil de commande d'injection et celui-ci traite le signal de l'arbre à cames en cas d'activation du programme de secours.

5. Dispositif de commande d'opérations cycliques dépendant des paramètres de fonctionnement de moteurs à combustion interne, notamment des opérations d'injection et/ou d'allumage pour commander des modes de fonctionnement différents avec au moins deux microprocesseurs reliés par un bus de données pour échanger les données, un premier microprocesseur (4) recevant un signal d'un capteur (1) équipant le vilebrequin, sans passer par le bus de données et un second microprocesseur (10) recevant un signal d'un capteur (7) équipant le vilebrequin sans passer par le bus de données, les microprocesseurs (4, 10) convertissant en données les signaux qu'ils reçoivent des capteurs (1, 7), dans les microproceseurs (4,10) le premier ou le second microprocesseur échangeant les données obtenues avec le second ou le premier microprocesseur en passant par le bus de données (13) et les microprocesseurs (4, 10) surveillant l'entrée des données et en cas d'absence des données, les programmes de secours sont activés dans les microprocesseurs (4, 10)), pour que le premier microprocesseur (4) commande l'injection par un programme de secours à l'aide du signal du capteur (1) équipant le vilebrequin et effectue une détection d'irrégularité de fonctionnement, et interrompt l'injection (6) lorsqu'une irrégularité de fonctionnement est détectée et dans le second microprocesseur (10), dans un autre programme de secours, à l'aide du signal du capteur (7) équipant l'arbre à cames on détermine la vitesse de rotation et l'instant d'allumage dépendant de cette vitesse de rotation.

6. Dispositif selon la revendication 5, caractérisé en ce que l'étage de décodage d'erreur émet un signal d'erreur lorsque le programme de secours est activé.
